# EUROPÄISCHE PATENTANMELDUNG

(11) **EP 1 749 427 A1**
(43) Veröffentlichungstag der Anmeldung: **07.02.2007**
(21) Anmeldenummer: 06015845.8
(22) Anmeldetag: 29.07.2006
(51) Int. Cl.: A01B 63/16

(54) **Gezogenes landwirtschaftliches Gerät**

(30) Priorität: 03.08.2005 DE 102005037085; 28.03.2006 DE 102006014134
(71) Anmelder: Amazonen-Werke H. Dreyer GmbH & Co. KG, 49205 Hasbergen (DE)
(72) Erfinder: Tiessen, Reimer Uwe, 26135 Oldenburg (DE); Thielicke, René, Dr., 04420 Markranstädt (DE)

(57) **Zusammenfassung**

An einem gezogenen landwirtschaftlichen Gerät mit einem Rahmen, an dem Bodenbearbeitungswerkzeuge angeordnet sind, und einer Zugdeichsel, sind seitlich neben der Zugdeichsel und vor den Bearbeitungswerkzeugen am Rahmen (1,3) in aufrechter Ebene bewegbar Tiefenführungsrollen oder -walzen (4) und im hinteren Bereich des Gerätes am Rahmen ein Fahrwerk angeordnet. Um ein gezogenes Gerät mit einer kurzen Zugdeichsel und in möglichst kurz gedrungener Bauweise zu schaffen, wobei dennoch beim Durchfahren von Kurven, insbesondere bei engen Wenderadien auf dem Feld ausreichend Platz zwischen dem das Gerät ziehenden Schlepper und den vorderen Teilen des Gerätes verbleibt ist vorgesehen, dass die vorderen Tiefenführungsrollen oder -walzen (4) derart am Rahmen (1,3) angelenkt sind, dass beim Anheben des Gerätes über die Zugdeichsel (2) die vorderen Tiefenführungsrollen oder -walzen (4) nach unten und hinten schwenken.

## Beschreibung

Die Erfindung betrifft ein gezogenes landwirtschaftliches Gerät gemäß der Oberbegriffe des Patentansprüche 1 und 6.

Derartige landwirtschaftliche Geräte sind in der Praxis bekannt. Derartige Geräte sind in der Regel relativ lang ausgebildet. Des Weiteren ist eine relativ lange und am Rahmen angeordnete Zugdeichsel erforderlich, um einen möglichst engen Wenderadius des landwirtschaftlichen Gerätes mit dem Zugfahrzeug zu ermöglichen. Vor allem wenn vordere Tiefenführungsrollen oder -walzen vor dem Rahmen angeordnet sind, ergibt sich eine relativ große Baulänge des Gerätes mit einer relativ langen Zugdeichsel.

Der Erfindung liegt die Aufgabe zugrunde, ein gezogenes Gerät mit einer kurzen Zugdeichsel und in möglichst kurz gedrungener Bauweise zu schaffen, wobei dennoch beim Durchfahren von Kurven, insbesondere bei engen Wenderadien auf dem Feld ausreichend Platz zwischen dem das Gerät ziehenden Schlepper und den vorderen Teilen des Gerätes verbleibt.

Diese Aufgabe wird erfindungsgemäß dadurch gelöst, dass die vorderen Tiefenführungsrollen oder -walzen derart am Rahmen angelenkt sind, dass beim Anheben des Gerätes über die Zugdeichsel die vorderen Tiefenführungsrollen oder -walzen nach unten und hinten schwenken. Infolge dieser Maßnahme wird der Raum zwischen dem hinteren Bereich des Zugfahrzeuges, insbesondere der hinteren Räder bzw. in Teilen des hinteren Teiles des Fahrwerkes des Zugfahrzeuges und den vorderen Bereich der Tiefenführungsrollen vergrößert, da die Tiefenführungsrollen oder -walzen beim Anheben des Gerätes über die Zugdeichsel nach unten und hinten schwenken.

Eine vorteilhafte Arbeitstiefeneinstellung der Bodenbearbeitungswerkzeuge lässt sich dadurch erreichen, dass im hinteren Bereich des Rahmens ebenfalls Tiefenführungsrollen oder -walzen angeordnet sind, dass den vorderen und hinteren Tiefenführungsrollen oder -walzen Einstellelemente zur Einstellung gegenüber dem Rahmen und den daran angeordneten Bearbeitungswerkzeugen zugeordnet sind, dass die dem vorderen und hinteren Tiefenführungsrollen oder -walzen zugeordneten Einstellelemente zur gleichzeitigen und gemeinsamen Verstellung der vorderen und hinteren Tiefenführungsrollen oder -walzen miteinander gekoppelt sind.

Ein einfaches nach hinten und unten verschwenken der vorderen und hinteren Tiefenführungsrollen oder -walzen beim Anheben des Gerätes über die Zugdeichsel lässt sich dadurch erreichen, dass die den vorderen Tiefenführungsrollen oder - walzen zugeordneten Einstellmittel ein verstellbares Anschlagelement aufweisen, dass die vorderen Tiefenführungsrollen oder -walzen mittels eines Schwenkhebels am Rahmen aufgehängt sind, dass der Schwenkhebel in der abgesenkten Arbeitsposition des Gerätes an dem Anschlagelement zur Anlage kommt. Infolge dieser Maßnahmen fallen die Tiefenführungsrollen oder -walzen aufgrund ihres Gewichtes nach unten und aufgrund der Anlenkung schwenken sie zusätzlich nach hinten. Eine einfache Anordnung des Schwenkhebels der vorderen Tiefenführungsrollen oder -walzen mit der gewünschten Tiefeneinstellung lässt sich dadurch erreichen, dass der Schwenkhebel als zweiseitiger Hebel ausgebildet ist, dass das über das Gelenk hinaus ragende freie Ende des Hebels an dem Anschlagelement zur Anlage kommt.

Eine vorteilhafte Ausgestaltung des Grubbers, dass das Gerät als Grubber und die Bearbeitungswerkzeuge als in den Boden eingreifende Bodenbearbeitungswerkzeuge, wie beispielsweise Grubberzinken und/oder schräg zum Boden und zur Fahrtrichtung angestellte Scheiben einer Scheibenegge ausgebildet sind, und dass hinter den in den Boden eingreifenden Bodenbearbeitungswerkzeugen die als Bodenwalze ausgebildeten hinteren Tiefenführungsrollen angeordnet sind.

Ein in die Bodenwalzen integriertes Fahrwerk für den Grubber lässt sich dadurch erreichen, dass einige der hinteren Tiefenführungsrollen oder -walzen das Fahrwerk des Gerätes bilden und gegenüber den übrigen Tiefenführungsrollen oder - walzen zum Anheben des Gerätes in die Transportposition gegenüber dem Rahmen und den übrigen Rollen absenkbar sind.

Um bei derartigen Geräten, bei denen zwischen den Bodenbearbeitungsgeräten und dem im hinteren Bereich des Gerätes am Rahmen angeordneten Fahrwerk Elemente zur Einebnung und/oder Durchmischung des Bodens angeordnet sind, ist zur einfachen Einstellung dieser Geräte bei Verstellung der Arbeitstiefe der Bodenbearbeitungswerkzeuge vorgesehen, dass im hinteren Bereich des Rahmens ebenfalls Tiefenführungsrollen oder -walzen angeordnet sind, dass den vorderen und hinteren Tiefenführungsrollen oder -walzen Einstellelemente zur Einstellung gegenüber dem Rahmen und den daran angeordneten Bearbeitungswerkzeugen zugeordnet sind, dass die dem vorderen und hinteren Tiefenführungsrollen oder -walzen zugeordneten Einstellelemente zur gleichzeitigen und gemeinsamen Verstellung der vorderen und hinteren Tiefenführungsrollen oder -walzen miteinander gekoppelt sind, dass zwischen der hinteren Walze und den Elementen zu Einebnung und/oder Durchmischung des Bodens Verstellelemente derart angeordnet sind, dass die Elemente zur Einebnung und Durchmischung des Bodens mit der hinteren Bodenwalze und den vorderen Tiefenführungsrollen oder -walzen über die Einstellelemente verstellbar sind. Hierdurch wird mittels der gemeinsamen Verstellung der vorderen und hinteren Tiefenführungsrollen und Walzen sowie der Elemente zur Einebnung und Durchmischung des Bodens eine einfache Einstellung des gesamten Gerätes bei einer Änderung der Arbeitstiefe erreicht.

Hierbei sind die Elemente zur Einebnung und/oder Durchmischung des Bodens als Scheiben einer Kurzscheibenegge ausgebildet. Hiermit kann auch unter schwierigsten Bedingungen eine Einebnung und Egalisierung des Bodens, der von den vorlaufenden Bodenbearbeitungswerkzeugen bearbeitet worden ist, erreicht werden.

In einer vereinfachten Ausführung können die Elemente zur Einebnung und/oder Durchmischung des Bodens als Scheiben ausgebildet. Es ist auch möglich, dass die Elemente zur Einebnung und/oder Durchmischung des Bodens als Egalisierungszinken ausgebildet sind.

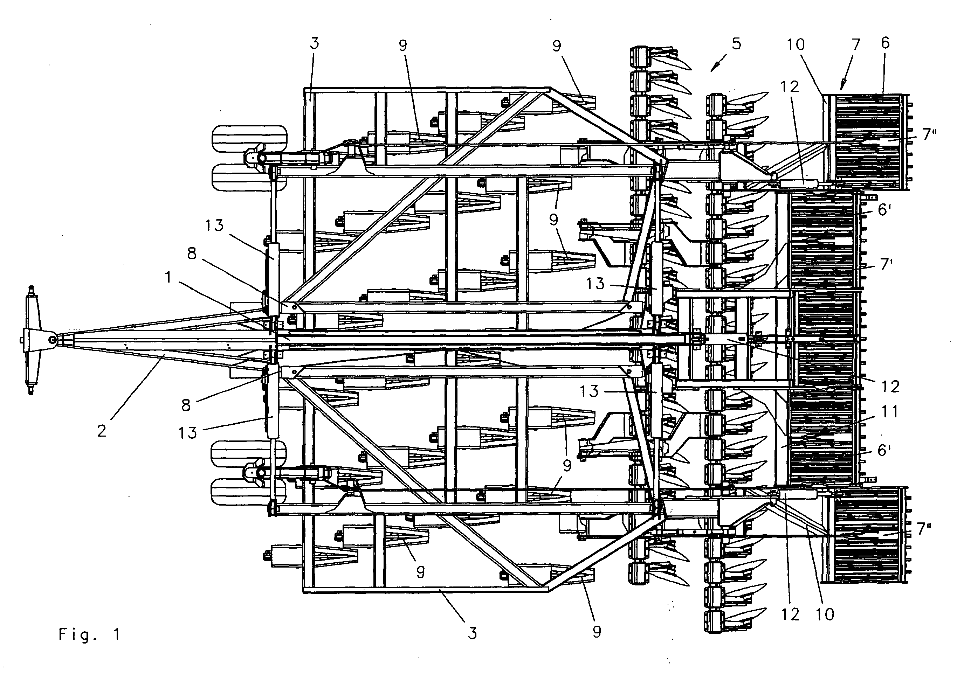

Weitere Einzelheiten der Erfindung sind den übrigen Unteransprüchen, der Beispielsbeschreibung und den Zeichnungen zu entnehmen. Hierbei zeigen
- Fig. 1: das als Grubber ausgebildete Bodenbearbeitungsgerät in der Draufsicht,
- Fig. 2: den Grubber in der Draufsicht und in Transportstellung,

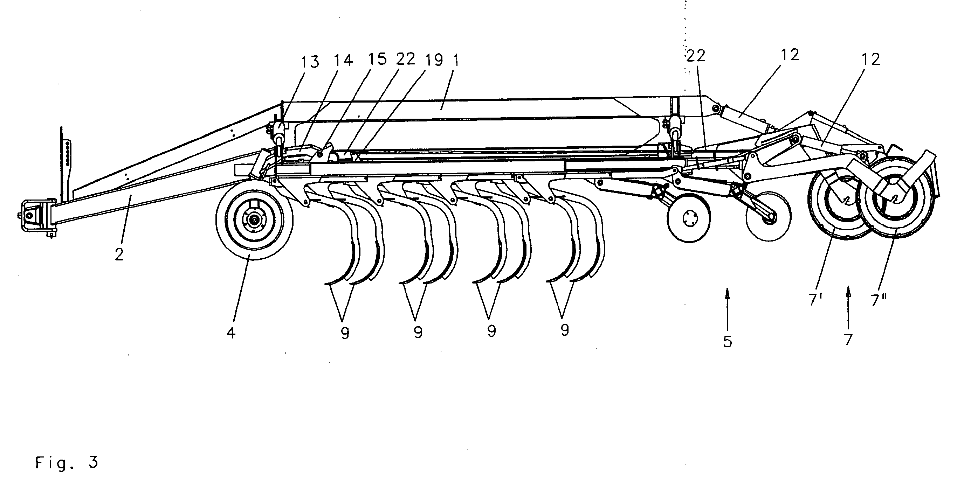

- Fig. 3: den Grubber in Seitenansicht und in Arbeitsstellung,
- Fig. 4: den Grubber in Seitenansicht und in Transportstellung,

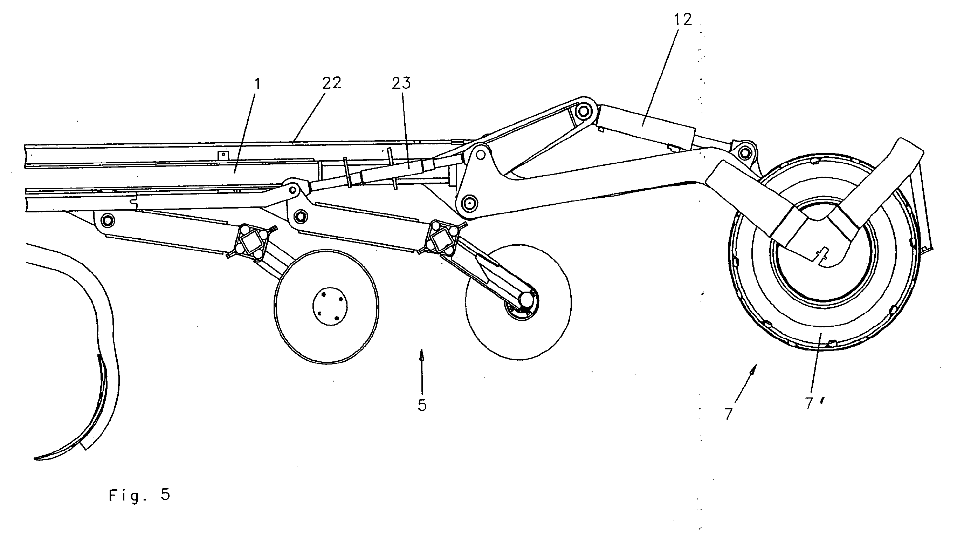

- Fig. 5: den hinteren Bereich des Grubbers in Seitenansicht, in Arbeitsstellung in vergrößertem Maßstab,

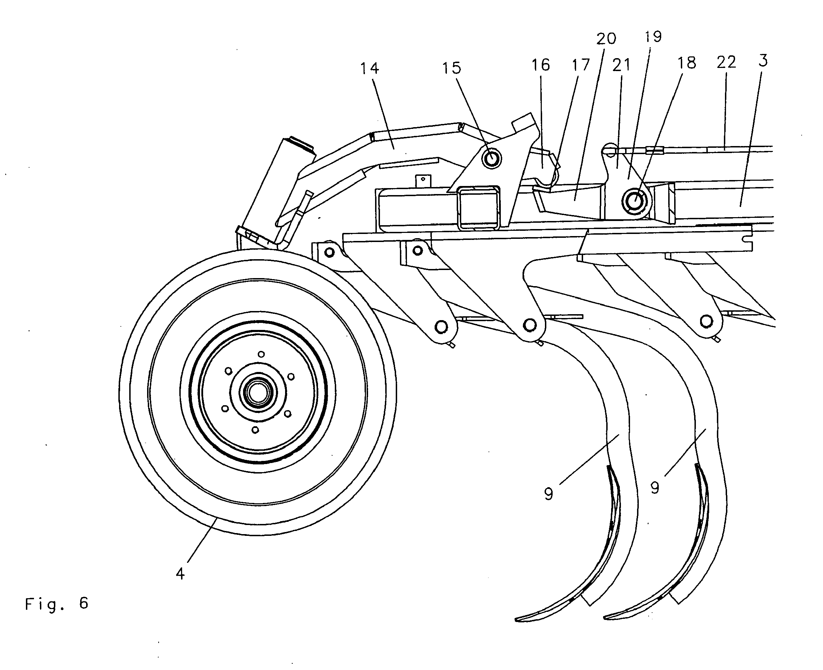

- Fig. 6: den vorderen Bereich des Grubbers in Seitenansicht, in Arbeitsstellung in vergrößertem Maßstab und
- Fig. 7: der vordere Bereich des Grubbers in Seitenansicht, in Transportstellung in vergrößertem Maßstab.

Das als Grubber ausgebildete landwirtschaftliche Gerät weist den Zentralrahmen 1 auf, an dem auf der Vorderseite die Zugdeichsel 2, weiterhin die beiden Seitenrahmen 3, die vor den Seitenrahmen 3 an den Seitenrahmen 3 angeordneten vorderen Tiefenführungsrollen 4, die hinter den Seitenrahmen 3 angeordnete Kurzscheibenegge 5 und die dahinter die aus Reifenelementen 6 bestehende Bodenwalze 7 auf. Die Seitenrahmen 3 sind mittels Gelenken 8, deren Gelenkachsen in Fahrtrichtung verlaufen, schwenkbar an dem Zentralrahmen 1 angeordnet. An dem Seitenrahmen 3 sind die als Grubberzinken 9 ausgebildeten Bodenbearbeitungswerkzeuge angeordnet.

Die Kurzscheibenegge 5 weist in zwei Querreihen hintereinander angeordnete und entgegengesetzten schräg zueinander angestellten Scheiben zur Einebnung und Durchmischung des Bodens, der von den Bodenbearbeitungswerkzeugen 9 bearbeitet worden ist, auf.

Die Bodenwalze 7 besteht aus der mittleren Walze 7' und den beiden seitlich und nach hinten gegenüber der mittleren Walzen 7' versetzten Walzen 7''. Die seitlichen Walzen 7" sind an dem jeweiligen Seitenrahmen 3 angelenkt, während die mittlere Walzen 7' über einen Zwischenrahmen an dem Zentralrahmen 1 angelenkt ist. Sowohl zwischen dem Zentralrahmen 1 und den mittleren Walzenrahmen wie auch zwischen den Seitenrahmen 3 und den seitlichen Walzen 7'' sind die jeweiligen Hydraulikzylinder 12 angeordnet.

Die Bodenwalze 7 bildet während der Arbeit als hinteres Tiefenführungselement für die vorlaufenden Bodenbearbeitungswerkzeugen nämlich den Grubberzinken 9 und den Scheiben der Kurzscheibenegge 5 und während des Transportes, wenn die Bodenwalze 7 gegenüber dem Bodenbearbeitungswerkzeugen 5 und 9 abgesenkt wird, das Fahrwerk. Während des Transportes des Gerätes werden die Seitenrahmen 3 um die Gelenkachsen der Gelenke 8 mittels der Hydraulikzylinder 13 aus der waagerechten Stellung in eine etwas vertikale Position eingeklappt. Nur die seitlichen Reifenelemente 6' der mittleren Walze 7' dienen während des Transportes auf der Straße als Fahrwerk, während die übrigen Reifenelemente der mittleren Walze 7' gegenüber den seitlichen Reifenelementen 6' sich in einer höheren Position befinden.

Die Walzen 7' und 7'' der Bodenwalze 7 sind über die Walzenrahmen 10 und 11 mittels der Gelenke 13 an den Seitenrahmen 3 und den Zentralrahmen 1 angelenkt und über dem zwischen den Seitenrahmen 3, bzw. Zentralrahmen 1 und den Walzenrahmen der Walzen 7' und 7'' angeordneten Hydraulikzylinder 12 gegenüber den Seitenrahmen 3 und dem Zentralrahmen 1 jeweils in der Höhe verstellbar, so dass über die Hydraulikzylinder 12 durch verstellen der Walzen 7' und 7'' gegenüber dem Seitenrahmen 3 und dem Zentralrahmen 1 die Arbeitstiefe, d.h. die Eingriffstiefe der Grubberzinken 9 und den Scheiben der Kurzscheibenegge 5 in den Boden einstellbar ist. Weiterhin kann über das Verstellen der Walzen 7' und 7'' gegenüber den Seitenrahmen 3 und dem Zentralrahmen 1 und den Bodenbearbeitungswerkzeugen 5, 7 nach unten das Gerät zum Wenden und zum Transport angehoben werden.

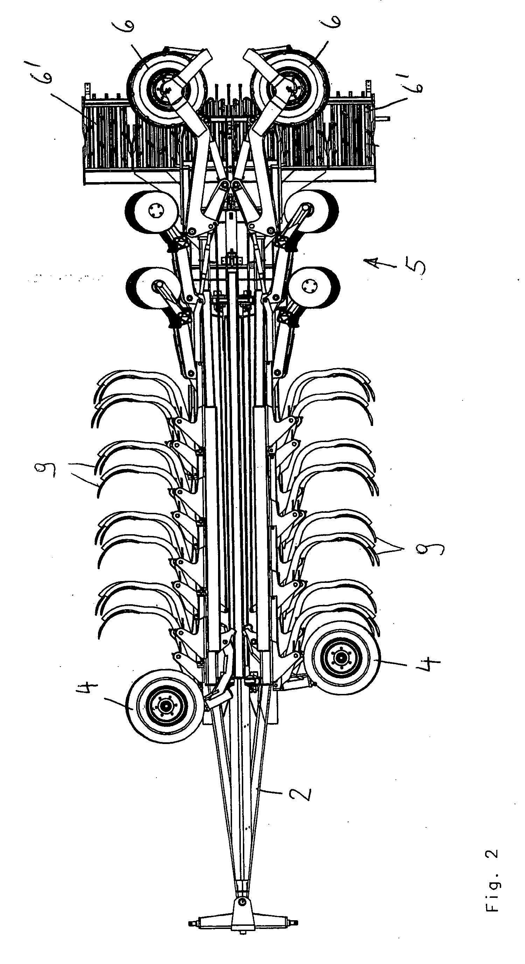

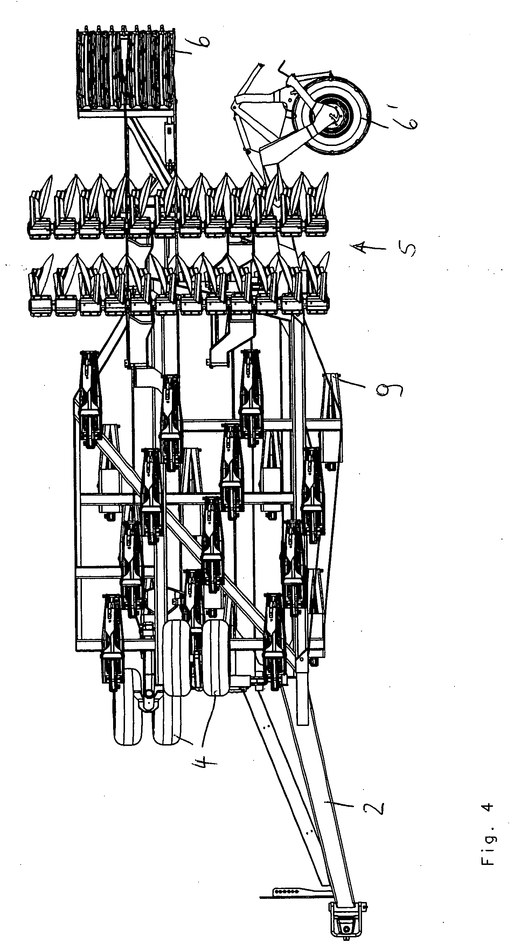

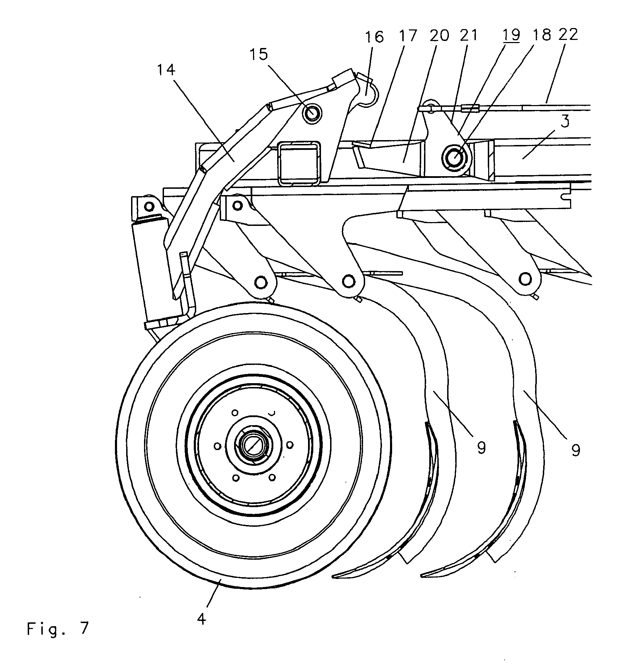

Auf der Vorderseite des Seitenrahmens sind die bereits erwähnten vorderen Tiefenführungsrollen 4, die auch als Walzen ausgebildet sein können, angeordnet. Die Tiefenführungsrollen 4 sind mittels Schwenkhebel 14 über das jeweilige Gelenk 15 an dem Rahmen 3 aufgehängt. Der Schwenkhebel 14 ist als zweiseitiger Hebel ausgebildet. Das über das Gelenk 15 frei hinaus ragende Ende 16 des Hebels 14 kommt an einem Anschlagelement 17, welches an dem Rahmen 3 mittels des Gelenkes 18 angeordnet ist, zur Anlage. Hierbei ist der Schwenkhebel 14 derart ausgebildet, dass er in der abgesenkten Arbeitsposition des Gerätes an dem Anschlagelement 17 zur Anlage kommt. Das Anschlagelement 17 ist Teil des Kipphebels 19. Der eine Hebel 20 des Kipphebels 19 weist das Anschlagelement 17 auf, an dem der Schwenkhebel 14 zur Anlage kommt. Das dem am jeweiligen Anschlagelement 17 abgewandten Ende 21 des jeweiligen Kipphebels 19 ist über eine jeweils als Zugseil 22 ausgebildete Verbindungseinrichtung jeweils mit dem jeweiligen Rahmen 10 der Walze 7' und 7'' verbunden. Somit werden gleichzeitig bei einer Verstellung der Bodenwalze 7 gegenüber dem Seitenrahmen 3 und dem Zentralrahmen 1 auch die Anschlagelemente 17 den vorderen Tiefeführungsrollen 4 zugeordneten Kipphebel 19, Anschlagelement 17 und Schwenkhebel 14 mit verstellt, so dass gleichzeitig auch die vorderen Tiefenführungselemente 4 mit den hinteren Tiefenführungselementen, die von der Bodenwalze 7 gebildet werden, gleichzeitig und gemeinsam verstellt werden, da die vorderen und hinteren Tiefenführungsrollen 4, 7 entsprechend miteinander gekoppelt sind. Die vorderen Tiefenführungsrollen 4 sind mittels der Schwenkhebel 14 derart am Rahmen 3 angeordnet, dass beim Anheben des vorderen Bereiches der Seitenrahmen und des Zentralrahmens 1 über die Zugdeichsel 2 durch den Dreipunktkraftheber des das Gerät ziehenden Schleppers die vorderen Tiefenführungsrollen 4 oder -walzen nach unten und gleichzeitig nach hinten schwenken, so dass der Freiraum zwischen den Hinterrädern des das Gerät ziehenden Schleppers und dem vorderen Bereich der Tiefenführungsrollen 4 in der Transportposition des Gerätes sich vergrößert, wie Fig. 2, 4, 7 zeigen.

Weiterhin sind zwischen den Walzen 7' und 7'' und der Kurzscheibenegge 5 Verstellelemente 23 angeordnet, damit die Scheiben der Kurzscheibenegge 5 mit der Bodenwalze 7 und den Tiefenführungsrollen 4 über die Einstellelemente 12 verstellt werden können.

Die Scheiben der Kurzscheibenegge 5 durchmischen und Ebnen den von den als Grubberzinken 9 ausgebildeten Bodenbearbeitungswerkzeugen bearbeiteten Boden ein und schaffen somit eine ebene Bodenoberfläche.

An Stelle einer Kurzscheibenegge 5 können auch in einer Reihe angeordnete Scheiben oder Egalisierungszinken, die als Elemente zur Einebnung und Durchmischung des Bodens dienen, angeordnet sein.

## Patentansprüche

1. Gezogenes landwirtschaftliches Gerät mit einem Rahmen, an dem Bodenbearbeitungswerkzeuge angeordnet sind, einer Zugdeichsel, seitlich neben der Zugdeichsel und vor den Bearbeitungswerkzeugen und vor den am Rahmen in aufrechter Ebene bewegbar angeordneten Tiefenführungsrollen oder -walzen und im hinteren Bereich des Gerätes am Rahmen angeordneten Fahrwerk, **dadurch gekennzeichnet, dass** die vorderen Tiefenführungsrollen (4) oder -walzen derart am Rahmen (1,3) angelenkt sind, dass beim Anheben des Gerätes über die Zugdeichsel (2) die vorderen Tiefenführungsrollen (4) oder - walzen nach unten und hinten schwenken.

2. Gerät nach einem oder mehreren der vorstehenden Ansprüche, **dadurch gekennzeichnet, dass** die den vorderen Tiefenführungsrollen oder -walzen (4) zugeordneten Einstellmittel ein verstellbares Anschlagelement (20) aufweisen, dass die vorderen Tiefenführungsrollen oder - walzen (4) mittels eines Schwenkhebels (14) am Rahmen (13) aufgehängt sind, dass der Schwenkhebel (14,16) in der abgesenkten Arbeitsposition des Gerätes an dem Anschlagelement (17) zur Anlage kommt.

3. Gerät nach einem oder mehreren der vorstehenden Ansprüche, **dadurch gekennzeichnet, dass** der Schwenkhebel (14) als zweiseitiger Hebel ausgebildet ist, dass das über das Gelenk (15) hinaus ragende freie Ende des Hebels (16) an dem Anschlagelement (17) zur Anlage kommt.

4. Gerät nach einem oder mehreren der vorstehenden Ansprüche, **dadurch gekennzeichnet, dass** das Gerät als Grubber und die Bearbeitungswerkzeuge als in den Boden eingreifende Bodenbearbeitungswerkzeuge, wie beispielsweise Grubberzinken (9) und/oder schräg zum Boden und zur Fahrtrichtung angestellte Scheiben einer Scheibenegge (5) ausgebildet sind, und dass hinter den in den Boden eingreifenden Bodenbearbeitungswerkzeugen (5,9) die als Bodenwalze (7) ausgebildeten hinteren Tiefenführungsrollen angeordnet sind.

5. Gerät nach einem oder mehreren der vorstehenden Ansprüche, **dadurch gekennzeichnet, dass** einige (6') der hinteren Tiefenführungsrollen (6,7) das Fahrwerk des Gerätes bilden und gegenüber den übrigen Tiefenführungsrollen oder -walzen (7) zum Anheben des Gerätes in die Transportposition gegenüber dem Rahmen und den übrigen Rollen oder Walzen (6,7) absenkbar sind.

6. Gezogenes landwirtschaftliches Gerät mit einem Rahmen, an dem Bodenbearbeitungswerkzeuge angeordnet sind, einer Zugdeichsel, seitlich neben der Zugdeichsel und vor den Bearbeitungswerkzeugen und vor den am Rahmen in aufrechter Ebene bewegbar angeordneten Tiefenführungsrollen oder -walzen und im hinteren Bereich des Gerätes am Rahmen angeordneten Fahrwerk, wobei zwischen den Bodenbearbeitungswerkzeugen und dem im hinteren Bereich des Gerätes am Rahmen angeordneten Fahrwerk Elemente zur Einebnung und/oder Durchmischung des Bodens angeordnet sind, insbesondere nach Anspruch 1, **dadurch gekennzeichnet, dass** im hinteren Bereich des Rahmens (1,3) ebenfalls Tiefenführungsrollen oder -walzen (7) angeordnet sind, dass den vorderen und hinteren Tiefenführungsrollen oder -walzen (4,7) Einstellelemente (12) zur Einstellung gegenüber dem Rahmen (1,3) und den daran angeordneten Bearbeitungswerkzeugen (5,9) zugeordnet sind, dass die dem vorderen und hinteren Tiefenführungsrollen oder -walzen (4,7) zugeordneten Einstellelemente (12, 16,17,,19,20,21,22) zur gleichzeitigen und gemeinsamen Verstellung der vorderen und hinteren Tiefenführungsrollen oder -walzen (4,7) miteinander gekoppelt sind, dass zwischen der hinteren Walze (7) und den Elementen (5) zu Einebnung und/oder Durchmischung des Bodens Verstellelemente derart angeordnet sind, dass die Elemente zur Einebnung und Durchmischung des Bodens mit der hinteren Bodenwalze (7) und den vorderen Tiefenführungsrollen (4) oder -walzen über die Einstellelemente verstellbar sind.

7. Gerät nach Anspruch 6, **dadurch gekennzeichnet, dass** die Elemente zur Einebnung und/oder Durchmischung des Bodens als Scheiben ausgebildet sind.

8. Gerät nach Anspruch 6, **dadurch gekennzeichnet, dass** die Elemente zur Einebnung und/oder Durchmischung des Bodens als Scheiben einer Kurzscheibenegge (5) ausgebildet sind.

9. Gerät nach Anspruch 6, **dadurch gekennzeichnet, dass** die Elemente zur Einebnung und/oder Durchmischung des Bodens als Egalisierungszinken ausgebildet sind.
